# EUROPEAN PATENT APPLICATION

(11) **EP 2 073 457 A1**
(43) Date of publication of application: **24.06.2009**
(21) Application number: 07817085.9
(22) Date of filing: 15.10.2007
(51) Int. Cl.: H04L 12/56

(54) **A METHOD AND APPARATUS FOR PREVENTING IGMP MESSAGE ATTACK**

(30) Priority: 31.12.2006 CN 200610063750
(71) Applicant: Huawei Technologies Co., Ltd., Longgang District, Shenzhen Guangdong 518129 (CN)
(72) Inventor: ZHAO, Fenghua, Shenzhen Guangdong 518129 (CN); WANG, Liyang, Shenzhen Guangdong 518129 (CN); ZHOU, Peng, Shenzhen Guangdong 518129 (CN); LING, Yi, Shenzhen Guangdong 518129 (CN); LIU, Xueqin, Shenzhen Guangdong 518129 (CN); YU, Yong, Shenzhen Guangdong 518129 (CN)
(74) Representative: Gulde Hengelhaupt Ziebig & Schneider
(86) International application number: PCT/CN2007/070894
(87) International publication number: WO 2008/080324

(57) **Abstract**

A method for preventing IGMP packet attacks includes two levels of anti-attack steps: anti-attacking on the basis of the source IP address of an IGMP packet; and anti-attacking on the basis of the multicast group IP address of the IGMP packet. Moreover, an apparatus for preventing IGMP packet attacks is disclosed herein. In the embodiments of the present invention, the attacks are prevented hierarchically in light of the source address and multicast group IP of the IGMP packet, thus effectively solving network exceptions caused by malicious IGMP packets which surge in a short time.

## Description

This application claims a priority from the Chinese Patent Application No. 200610063750.9, filed with the Chinese Patent Office on December 31, 2006 , entitled "Method and Apparatus for Preventing IGMP Packet Attack", the contents of which are incorporated herein by reference in their entirety.

### FIELD OF THE INVENTION

The present invention relates to network communication technologies, and in particular, to a method and an apparatus for preventing Internet Group Management Protocol (IGMP) packet attack.

### BACKGROUND

The IGMP is a communication protocol applied between a router and a host, and its main functions are to maintain the multicast group information between the router and the host in order to receive the user multicast traffic. With the development of networks, the multicast service becomes a hot service over the Internet.

However, the IGMP packet is simple, and it is easy to construct an IGMP packet. Network hackers may send large-traffic IGMP packets to a device quickly through an IGMP packet sending tool (which is easily available). On a router or switch that receives the packets, the IGMP packets are processed generally through a Central Processing Unit (CPU) rather than a forwarding engine. On a centralized device, the CPU processing capability is generally not high, and numerous attack packets make the CPU too busy to handle other protocol packets normally, thus causing network exception. On a distributed device, the forwarding engine has a great capability on the interface board, and submits the IGMP packets to the CPU on the interface board or main control board for processing, which also makes the CPU too busy to handle other protocol packets normally.

As a maturing technology currently, the IGMP Snooping function monitors the IGMP packet on the switch, and learns the output port information. Its learning function is handled through the CPU. Therefore, the IGMP packet attack affects the layer-2 switch more and more seriously.

The currently prevalent countermeasures against IGMP packet attacks are as follows:
On a centralized device, the IGMP packets are generally buffered through a packet queue. The packets longer than the queue length are discarded. IGMP packet attacks are relieved through control of the queue length.
On a distributed device, the packets submitted by the forwarding engine are generally controlled through a token bucket. A token bucket can be imaged as a container with a fixed capacity, and tokens are placed into the bucket at a specified speed (which is configurable). When packets pass, a check is made about whether any token is in the token bucket. If enough tokens are in the bucket, the packets are sent out evenly at a specified speed; otherwise, the packets are discarded. Through the token bucket, the speed of submitting packets can be restricted.

However, the solutions to preventing IGMP packet attacks in the prior art have these defects:
The packets or messages (generally known as IGMP packets) which surge in a short time and have the same network address information are unidentifiable. If rate control is exercised without identifying the address information of such packets or messages, the packets or messages (which are generally viruses or attacks) with a high rate (namely, surging in a short time) and the same network address information are handled in the same way as handling the normal packets or messages. Consequently, the normal packets or messages are discarded or pushed away, and the purpose of preventing attacks is disrupted.

### SUMMARY

A method and an apparatus for preventing IGMP packet attacks are provided in embodiments of the present invention, where the attacks are prevented hierarchically in light of the source address and multicast group IP of the IGMP packets, thus effectively solving network exceptions caused by malicious IGMP packets which surge in a short time.

The present invention is realized through the following technical solution.

A method for preventing IGMP packet attacks, including two levels of anti-attack steps:
anti-attacking on the basis of the source IP address of an IGMP packet, the anti-attacking being implemented by filtering the IGMP packet according to the source IP address of the IGMP packet; and
anti-attacking on the basis of the multicast group IP address of the IGMP packet, the anti-attack being implemented by filtering the IGMP packet according to the port number, Virtual Local Area Network (VLAN), and multicast group IP address of the IGMP packet.

Moreover, an apparatus for preventing IGMP packet attacks is disclosed herein. The apparatus includes two levels of anti-attack units:
an anti-attack unit based on the source IP address of an IGMP packet, adapted to filter the IGMP packet according to the source IP address of the IGMP packet to prevent attacks; and
an anti-attack unit based on the multicast group IP address of the IGMP packet, adapted to filter the IGMP packet according to the port number, VLAN, and multicast group IP address of the IGMP packet to prevent attacks.

In the embodiments of the present invention, the attacks are prevented hierarchically in light of the source address and multicast group IP of the IGMP packet, thus effectively solving network exceptions caused by malicious IGMP packets which surge in a short time.

### BRIEF DESCRIPTION OF THE DRAWINGS

Figure 1 is a flowchart of preventing IGMP packet attacks in an embodiment of the present invention;

Figure 2 is level-1 flowchart of preventing attacks in light of the source IP of the IGMP packet in an embodiment of the present invention;

Figure 3 is a block diagram of a device for preventing IGMP packet attacks in a first embodiment of the present invention;

Figure 4 is a partial flowchart of a method for preventing IGMP packet attacks in the first embodiment of the present invention;

Figure 5 is a block diagram of a device for preventing IGMP packet attacks in a second embodiment of the present invention;

Figure 6 is a partial flowchart of a method for preventing IGMP packet attacks in the second embodiment of the present invention; and

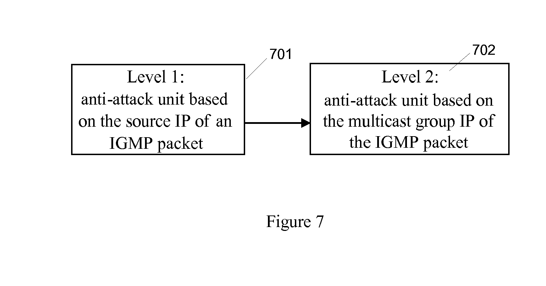

Figure 7 shows a structure of an apparatus for preventing IGMP packet attacks in an embodiment of the present invention.

### DETAILED DESCRIPTION

The exemplary embodiments and examples elaborated in this document are for illustration purposes only, and are not intended to restrict the present invention.

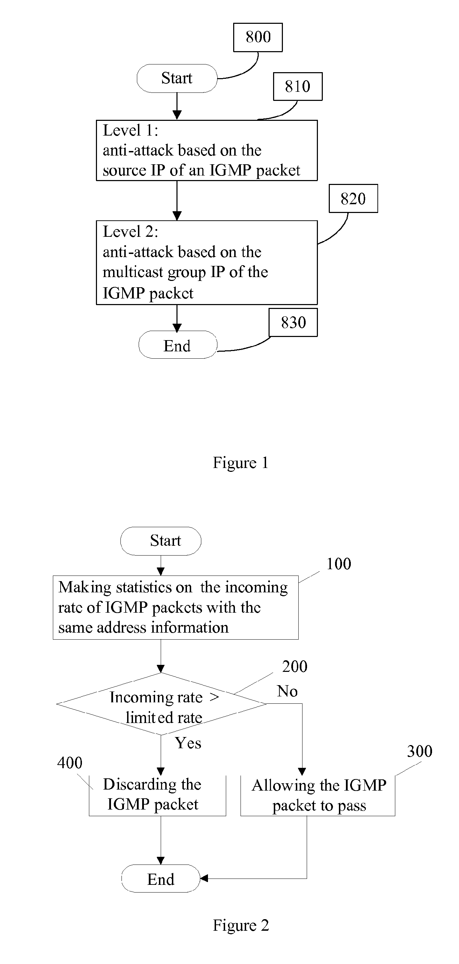

As shown in Figure 1, the method for preventing IGMP packet attacks in an embodiment of the present invention includes the following steps:

800: Start.

810: Level-1 anti-attack is implemented on the basis of the source IP address of an IGMP packet.

The packets are filtered based on the source IP address of the IGMP packets to prevent the same source IP address from generating numerous IGMP packets in a short time. If numerous IGMP packets are generated in a short time from the same source IP, the IGMP packets are regarded as viruses or attacks and discarded, and the process skip to step 830; otherwise, the IGMP packets are allowed to pass, and the process proceeds to step 820.

820: Level-2 anti-attack is implemented on the basis of the multicast group IP address of the IGMP packet.

After the level-1 anti-attack, the CPU resources of the device are still occupied massively and the normal service processing is still affected if the number of users who access the device is very large or the attacker changes the source IP address to attack. Therefore, the IGMP packets need to be suppressed in light of the multicast group IP address in the IGMP packet in order to prevent attacks.

In the case that the packets are filtered on basis of the "Port number + VLAN ID + multicast group IP", it is necessary to maintain the multicast group information of the corresponding "port + VLAN", regarding the router or switch connected with the user PC or source device. In practice, the multicast service is can be applied normally only if a multicast group exists in the "port + VLAN" no matter how many users access the "port + VLAN", without caring about the source IP of the user. Therefore, the IGMP packets may be suppressed in light of the "port + VLAN + multicast group IP", and only a few IGMP packets are allowed to pass in a unit time, with the remaining packets being discarded. This fulfills the purpose of preventing attacks.

If numerous IGMP packets are generated in a short time from the same multicast group IP, the IGMP packets are regarded as viruses or attacks and discarded; otherwise, the IGMP packets are allowed to pass, and the process proceeds to step 820.

830: End.

Corresponding to the foregoing method, an apparatus for preventing IGMP packet attacks is disclosed in an embodiment of the present invention. The apparatus includes: level-1 anti-attack unit 701 based on the source IP address of the IGMP packet; and level-2 anti-attack unit 702 based on the multicast group IP of the IGMP packet.

In Figure 1, step 810 is identical to step 820 as regards the principles of preventing attacks on each level, and is different from step 820 in the judgment criteria (In step 810, the judgment criterion is the source IP address of the IGMP packet. In step 820, the judgment criterion is "Port + VLAN + multicast group IP".), as detailed in Figure 2.

### Embodiment 1

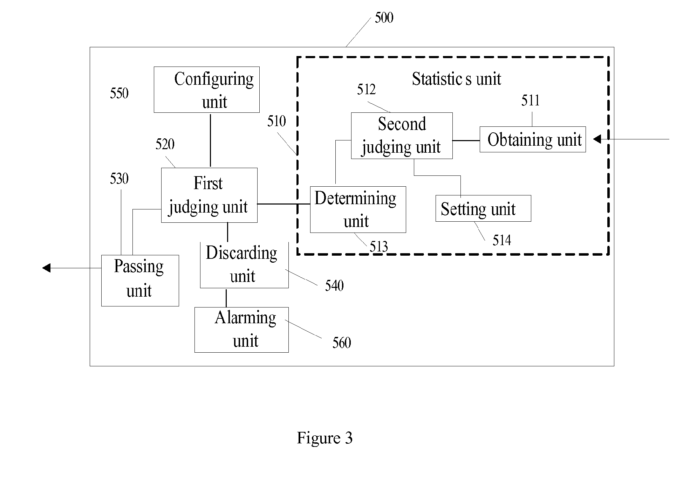

Figure 3 is a block diagram of a module for preventing IGMP packet attacks in an embodiment of the present invention. The module 500 includes: a statistic unit 510, a first judging unit 520 coupled with the statistic unit 510, a passing unit 530 and a discarding unit 540 both coupled with the first judging unit 520, and a configuring unit 550 coupled with the first judging unit 520.

A method for preventing IGMP packet attacks on two levels is provided in an embodiment of the prevent invention. The process of each level is shown in Figure 2. The method shown in Figure 2 may be implemented by the module 500 shown in Figure 3. Therefore, the description of Figure 2 is equivalent to the description about functions of the units in Figure 3. As shown in Figure 2, after start, the method includes:

Step 100: The statistics unit 510 makes statistics on the incoming rate of the received IGMP packets with the same address information.

It is to be noted that for step 810, the address information is the source IP address of the IGMP packet. For step 820, the address information is the multicast group IP address of the IGMP packet.

Step 200: The first judging unit 520 judges whether the incoming rate is greater than the limited rate. If the incoming rate is greater than the limited rate, the process proceeds to step 400; or else step 300.

The limited rate may be preset by the configuring unit 550, and a judgment result may be obtained through comparison between the incoming rate and the limited rate. It is to be noted that this step has many variations. For example, the reciprocal of the incoming rate is compared with the reciprocal of the limited rate. Such variations can be obtained by those skilled in the art without making any creative effort, and are covered in the protection scope of the present invention.

Step 300: The passing unit 530 (which is related to negative judgment of the first judging unit 520) allows the IGMP packet to pass, and then the process is ended.

Because the incoming rate is less than or equal to the limited rate, the network information is not viruses or attacks which surge in a short time, but is normal packets; and therefore, is allowed to pass.

Step 400: The discarding unit 540 (which is related to positive judgment of the first judging unit 520) discards the IGMP packet, and then the process is ended.

Because the incoming rate is greater than the limited rate, the network information is viruses or attacks which surge in a short time, and therefore, is discarded. This avoids performance deterioration and network congestion caused by processing of such virus information in the CPU of the device.

Optionally, when the number of discarded packets exceeds an alarm threshold, an alarm about the IP address of the packets may be raised so that the user can search out the attacker directly. This step is performed by the alarming unit 560, which is optional.

Specifically, as shown in Figure 3, the statistic unit 510 includes an obtaining unit 511, a second judging unit 512 coupled with the obtaining unit 511, a determining unit 513 coupled with the second judging unit 512, and a setting unit 514.

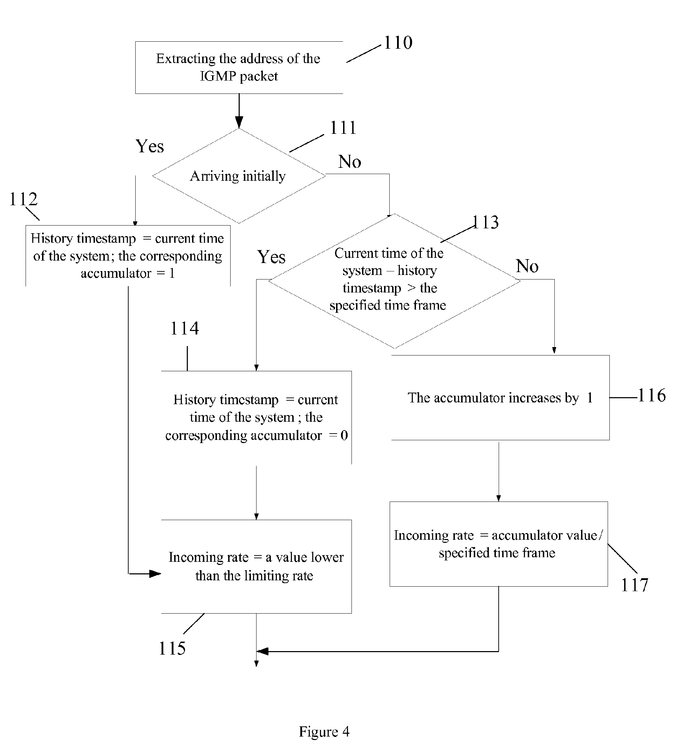

In order to make the embodiments of the present invention clearer, step 100 in Figure 2 is detailed below, and the functions of the sub-units are described by reference to the statistic unit 510 in Figure 3. As shown in Figure 4, step 100 includes the following steps.

Step 110: The obtaining unit 511 extracts the address information of the IGMP packet. It is to be noted that for step 810, the address information is the source IP address of the IGMP packet; for step 820, the address information is the multicast group IP address of the IGMP packet.

Step 111: The second judging unit 512 judges whether the IGMP packet arrives initially; if the IGMP packet arrives initially, the process proceeds to step 112; or else step 113.

The purpose of this step is to judge whether the IGMP packet from this IP address enters the module 500 initially so that the corresponding parameters can be set up and monitored for the IP address in the subsequent process.

Step 112: The IGMP packet initializes the history timestamp and accumulator corresponding to the IP address according to the IP address information of the IGMP packet, namely, records the current time of the system as the history timestamp and sets the accumulator to 1. This step aims to initialize the information corresponding to an IP address and is performed by the setting unit 514.

In order to make statistics on the incoming rate of the IGMP packets related to an IP address, the relevant parameters (for example, history timestamp and accumulator in this embodiment) need to be set up for the IP address. It is to be noted that each IP address has its own history timestamp and accumulator. Therefore, different IP address has a different history timestamp and accumulator. However, the current time of the system is a unique value at one time. Therefore, the current time of the system is a constant at a specific time. The purpose of this step is to grant the values of the relevant history timestamp and accumulator to an IP address from which a packet arrives initially.

Steps 113-117 determine the incoming rate according to the values of the history timestamp, current time of the system, and accumulator, and are performed by the determining unit 513. The detailed process is as follows:

Step 113: The determining unit 513 judges whether the difference between the current time of the system and the history timestamp falls within a specified time frame. If the difference falls within the specified time frame, the process proceeds to step 114; or else step 116.

In this step, the specified time frame may be configured by the configuring unit 550, and is a denominator of the formula for calculating the incoming rate. For example, if the specified time frame is 1 second, it is indicated that there is a need to make statistics on the number of IGMP packets arriving from the same address.

Step 114: The determining unit 513 clears the history timestamp and accumulator, and specifically, records the current time of the system as the history timestamp, and sets the accumulator to 0.

When the process comes to this step, it proves that the time interval between one IGMP packet from the IP address and the next IGMP packet from the same IP address exceeds the specified time frame, and the incoming rate must be less than the limited rate. In this case, it is necessary to clear the history timestamp and accumulator related to the IP address to facilitate subsequent statistics.

Step 115: The determining unit 513 grants a value lower than the limited rate to the incoming rate, thus getting ready for judging whether the incoming rate is greater than the limited rate in the next step. Nevertheless, this step is omissible, and the determining unit 513 may transfer the information about the incoming rate being less than the limited rate to the next step directly. In summary, the purpose can be fulfilled in many ways in practice.

Step 116: The accumulator increases by 1.

When the process comes to this step, it proves that another IGMP packet with the same IP address information arrives in the specified time frame. Therefore, the accumulator corresponding to the IP address increases by a certain amount which is set flexibly according to the incoming rate and limited rate. The amount given here is only a preferred value.

Step 117: The determining unit 513 calculates the incoming rate by using the accumulator and the specified time frame.

Note: For the IGMP packets which arrive frequently within the specified time frame (such as 1 second) from the same source IP address, if the specified limited rate is 8 packets per second, the first eight IGMP packets go through step 300 and are allowed to pass because the incoming rate (namely, the ratio of the accumulator value to the specified time frame) is less than the limited rate at the time of arrival. The ninth packet that arrives within the 1 second and the subsequent packets are discarded because the incoming rate is greater than the limited rate. Because each IGMP packet passes through the module 500 quickly, the IGMP packets do not stay in the module 500. However, for that reason, some packets fail to be discarded. For example, the first eight packets mentioned above are allowed to pass.

### Embodiment 2

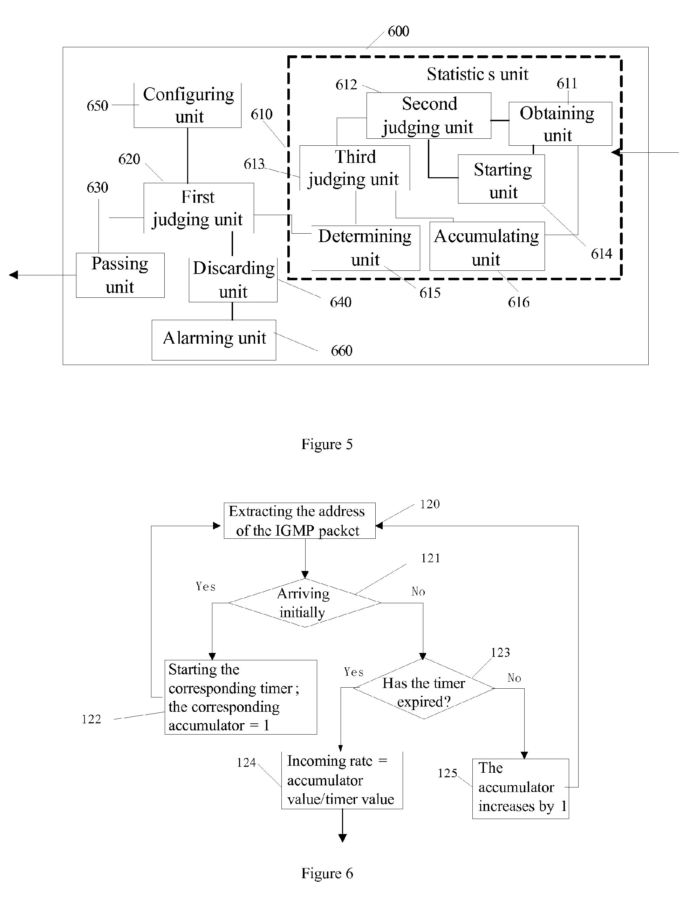

Figure 5 is a block diagram of another module for preventing IGMP packet attacks in an embodiment of the present invention. As shown in Figure 3, the module 600 is similar to the module 500 and differs only in the implementation mode of the statistic unit. Specifically, the module 600 includes: a statistic unit 610, a first judging unit 620 coupled with the statistic unit 610, a passing unit 630 and a discarding unit 640 both coupled with the first judging unit 620, an alarming unit 660 coupled with the discarding unit 640, and a configuring unit 650 coupled with the first judging unit 620. The functions of the units are the same as the functions of units in the module 500, and differ only in the implementation mode of the statistic unit. Specifically, the statistic unit 610 includes: an obtaining unit 611; a second judging unit 612, an starting unit 614, and an accumulating unit 616, which are coupled with the obtaining unit 611; a third judging unit 613 and an starting unit 614 both coupled with the second judging unit 612; and a determining unit 615 and an accumulating unit 616 both coupled with the third judging unit 613.

Figure 6 shows another embodiment of step 100 shown in Figure 2.

Step 120 is equivalent to step 110 and is performed by the obtaining unit 611. Step 121 is equivalent to step 111 and is performed by the second judging unit 612. Step 120 and step 121 are not repeated here any further.

Step 122: The timer related to the IP address information of the IGMP packet is started, the accumulator related to the IP address information of the IGMP packet is set to 1, and the process returns to step 120.

This step aims to initialize the information corresponding to an IP address, and is performed by the starting unit 614. In order to make statistics on the incoming rate of the IGMP packets related to an IP address, the relevant parameters (for example, timer and accumulator in this embodiment) need to be set up for the IP address. It is to be noted that each IP address has its own timer and accumulator. Therefore, each different IP address has a different timer and accumulator. This step aims to set the timer and accumulator to a value such as 1 for the IP address of a packet which arrives initially. Upon completion of initialization, the process returns to step 120 to continue with the next IGMP packet for processing.

Step 123: The third judging unit 613 judges whether the timer expires. If the timer expires, the process proceeds to step 124; or else step 125.

Step 124: The determining unit 615 calculates the incoming rate. Specifically, the ratio of the corresponding accumulator value to the corresponding timer value may represent the incoming rate.

Step 125: The corresponding accumulator increases by 1, and the process returns to step 120. The accumulator continues with the next network information for processing.

It is evident that the IGMP packet stays in the module 600 in this embodiment. That is because: for each IP address, a timer corresponding to the IP address exists in the module 600; in the specified time frame of the timer, the IGMP packets related to the IP address stays in the module 600; and the determining unit decides whether to allow the IGMP packets to pass or discard the IGMP packets only after calculating the incoming rate upon expiry of the timer. As a result, no virus packet fails to be discarded. For an IP address, if much network information arrives at the module 600 within the time frame of the timer, the network information is totally discarded because the incoming rate exceeds the limited rate, and no failure of discarding occurs.

It is to be noted that the method and module provided in the embodiments of the present invention may be realized through software, hardware, or firmware such as firewall device/software and antivirus device/software. If the method and the module are realized through hardware such as Application Specific Integrated Circuit (ASIC), the processing speed is high.

Although the invention has been described through exemplary embodiments, the invention is not limited to such embodiments. It is apparent that those skilled in the art can make various modifications and variations to the invention without departing from the spirit and scope of the invention, and such modifications and variations are covered by the protection scope of the present invention.

## Claims

1. A method for preventing Internet Group Management Protocol (IGMP) packet attacks, comprising two levels of anti-attack steps:
anti-attacking on the basis of a source IP address of an IGMP packet, the anti-attacking being implemented by filtering the IGMP packet according to the source IP address of the IGMP packet; and
anti-attacking on the basis of a multicast group IP address of the IGMP packet, the anti-attacking being implemented by filtering the IGMP packet according to the port number, Virtual Local Area Network (VLAN), and multicast group IP address of the IGMP packet.

2. The method according to claim 1, wherein each level of anti-attack step comprises:
making statistics on an incoming rate of received IGMP packets with same address information;
judging whether the incoming rate is greater than a limited rate; and
discarding the IGMP packet if the incoming rate is greater than the limited rate; or
allowing the IGMP packet to pass if the incoming rate is not greater than the limited rate.

3. The method according to claim 2, wherein the process of making statistics on the incoming rate of the received IGMP packets with the same address information comprises:
extracting the address information of the IGMP packet;
judging whether the address arrives initially; and
recording current time of the system as history timestamp and setting an accumulator to 1 if the address information indicates that the address arrives initially; or else
determining the incoming rate according to the history timestamp, current time of the system, and accumulator if the address arrives repeatedly.

4. The method according to claim 2, wherein the process of making statistics on the incoming rate of the received IGMP packets with the same address information further comprises:
extracting the address information of the IGMP packet;
judging whether the address arrives initially; and
starting a timer, setting the accumulator to 1 and returning to the step of extracting the address information of the IGMP packet if the address arrives initially; or
judging whether the timer expires if the address information indicates that the address arrives repeatedly;
determining the incoming rate according to the timer and the accumulator if the timer expires; or
increasing the accumulator by 1 and returning to the step of extracting the address information of the IGMP packet if the timer does not expire.

5. The method according to any of claims 2-4, further comprising: configuring a limited rate.

6. The method according to claim 5, wherein after discarding the IGMP packet, the method further comprises:
raising an alarm for the IP address of the IGMP packet if the number of the discarded packets of the IP address exceeds an alarm threshold.

7. An apparatus for preventing Internet Group Management Protocol (IGMP) packet attacks, comprising two levels of anti-attack units:
an anti-attack unit based on a source IP address of an IGMP packet, adapted to filter the IGMP packet according to the source IP address of the IGMP packet to prevent attacks; and
an anti-attack unit based on a multicast group IP address of the IGMP packet, adapted to filter the IGMP packet according to the port number, Virtual Local Area Network (VLAN), and multicast group IP address of the IGMP packet to prevent attacks.

8. The apparatus for preventing IGMP packet attacks according to claim 7, wherein: each level of anti-attack unit comprises:
a statistics unit, adapted to make statistics on an incoming rate of received IGMP packets with same address information;
a first judging unit, coupled with the statistics unit and adapted to judge whether the incoming rate on which the statistics unit make statistics is greater than a limited rate, and generate a positive result or a negative result;
a discarding unit, coupled with the first judging unit and related to the positive result, and adapted to discard the IGMP packet; and
a passing unit, coupled with the first judging unit and related to the negative result, and adapted to allow the IGMP packet to pass.

9. The apparatus according to claim 8, wherein the statistics unit comprises:
an obtaining unit, adapted to extract the address information of the IGMP packet;
a second judging unit, coupled with the obtaining unit and adapted to judge whether the address information extracted by the obtaining unit arrives initially, and generate a second positive result or a second negative result;
a setting unit, coupled with the second judging unit and related to the second positive result, and adapted to record current time of the system as history timestamp and set an accumulator to 1; and
a determining unit, coupled with the second judging unit and related to the second negative result, and adapted to determine the incoming rate by using the history timestamp, current time of the system, and accumulator.

10. The apparatus according to claim 8, wherein the statistics unit comprises:
an obtaining unit, adapted to extract the address information of the IGMP packet;
a second judging unit, coupled with the obtaining unit and adapted to judge whether the address information extracted by the obtaining unit arrives initially, and generate a second positive result or a second negative result;
a starting unit, coupled with the second judging unit and related to the second positive result, and adapted to start a timer, set an accumulator to a value "1", and return to the obtaining unit;
a third judging unit, coupled with the second judging unit and related to the second negative result, and adapted to judge whether the timer expires, and generate a third positive result or a third negative result;
a determining unit, coupled with the third judging unit and related to the third positive result, and adapted to determine the incoming rate according to the timer and the accumulator; and
an accumulating unit, coupled with the third judging unit and related to the third negative result, and adapted to increase the accumulator by the value "1", and return to the obtaining unit.

11. The apparatus according to any of claims 8-10, further comprising:
a configuring unit, coupled with the judging unit and adapted to configure the limited rate.

12. The apparatus according to claim 11, further comprising:
an alarming unit, coupled with the discarding unit, and adapted to raise an alarm for the IP address of the IGMP packet if the number of discarded packets exceeds an alarm threshold.
